# EUROPEAN PATENT APPLICATION

(11) **EP 4 109 657 A1**
(43) Date of publication of application: **28.12.2022**
(21) Application number: 21215442.1
(22) Date of filing: 17.12.2021
(51) Int. Cl.: H01M 50/342, H01M 50/358, H01M 50/375

(54) **DIRECTIONAL VENTING COVER FOR A BATTERY SYSTEM**

(30) Priority: 24.06.2021 US 202117357041
(71) Applicant: Rivian IP Holdings, LLC, Plymouth MI 48170 (US)
(72) Inventor: Feltham, Graham Lloyd, Garden City, 48135 (US); Cournoyer, Travis, Redondo Beach, 90278 (US); Crosatti, Lorenzo, Aliso Viejo, 92656 (US)
(74) Representative: Brown, Alexander Edward

(57) **Abstract**

A battery system for an electric vehicle includes one or more battery modules that include one or more battery cells. Each of the battery cells include a plurality of vents on a first end and oriented in a first direction (e.g., an upward direction). The battery system also includes a touch cover arranged above the first end of the battery cells, wherein the touch cover includes a plurality of opening features configured to direct the gas to flow away from the plurality of battery cells, or away from sensitive components, to a predetermined direction that differs from the first direction. The plurality of opening features direct gas in a second direction different from the first direction. The opening features include louvres, arranged in strips or an array, or other suitable venting openings. The touch cover may be formed by pressing a sheet of material.

## Description

### Introduction

The present disclosure is directed towards a cover for a battery system having vents, and more particularly towards a cover that directs hot fluid away from battery cells or other components of a battery system.

### Summary

In some embodiments, gases escaping from a battery vent of a battery cell of a battery system are directed upward when the battery cell is heated, for example. Openings in a cover arranged over the battery cell directs the gas from the upward direction to a predetermined direction and away from adjacent battery cells. The predetermined direction is oriented toward a side venting port, toward a plenum, away from sensitive components, or other suitable flow destination.

In some embodiments, the present disclosure is directed to a battery system including at least one battery cell, possibly a carrier assembly, and a touch cover. The battery cell may include a vent on a first end of the cell, such as a top end or side of the cell, to allow gas to be emitted from the battery cell. In some instances, there may be a plurality of battery cells, positioned in an arrangement, that may include a plurality of vents on a first end of the cells and each oriented in a first direction. The carrier assembly may electrically couple subsets of the plurality of battery cells in parallel and coupling the subsets in series. The touch cover may be arranged above and/or adjacent to the first end of the cell. The touch cover may include at least one opening configured to direct the gas emitted from the vent of the battery cell in a predetermined direction that may be different from the first direction. In some instances, the touch cover includes a plurality of openings configured to direct gas, air, and/or a combination thereof to away from the plurality of battery cells and/or the first end of the one or more cells, among other possibilities. The plurality of openings and/or features may direct the gas in a second predetermined direction different from the first predetermined direction, such as normal, perpendicular to, and/or angled from the first direction. In some embodiments, the battery system includes an outer enclosure arranged around the battery cell and/or the plurality of battery cells, the carrier assembly, and the touch cover. In some such embodiments, a vent port is arranged in a wall of the outer enclosure.

In some embodiments, the opening and/or the plurality of openings is configured to direct/redirect the gas, air, and/or a combination thereof to flow along an interior surface of the outer enclosure and towards the vent port. In some embodiments, for example, the predetermined direction is oriented towards heat-activated module bay separators to direct gas flow towards the vent port. The heat-activated module bay separators (also referred to as "barriers") may be arranged between adjacent battery modules (e.g., all battery modules in a similar manner), and the heat generated by the battery cells and transferred (e.g., via convection) through the opening features activate the barriers to prevent flow between module bays.

In some embodiments, the touch cover includes a flat sheet of material, and the opening and/or the plurality of openings includes a plurality of louvres raised above the flat sheet of material to direct the gas emitted to the second direction.

In some embodiments, the plurality of louvres includes a plurality of louvre strips. In some embodiments, the plurality of louvres comprises an array of louvres. In some embodiments, each louvre is aligned to one or more respective battery cells of the plurality of battery cells.

In some embodiments, the carrier assembly arranges the plurality of battery cells in an array, and includes a plurality of busbars. In some such embodiments, the carrier assembly includes a plurality of through features that correspond to the plurality of vents to allow the gas or air to flow past the carrier assembly.

In some embodiments, the touch cover includes a flat sheet of material, the plurality of opening features includes a plurality of reliefs (e.g., partial cutouts, partial reliefs that include thinned material, or a combination thereof) in the flat sheet of material defining a plurality of regions or tabs, and the plurality of regions or tabs are configured to deflect under pressure to direct the gas to flow in the second direction. To illustrate, in some embodiments, the touch cover includes a flat sheet of material, the plurality of opening features includes a plurality of partial reliefs in the flat sheet of material defining a plurality of regions, and the plurality of regions are configured to partially break free from the flat sheet and to deflect under pressure to direct the gas to flow in the second direction.

In some embodiments, each battery cell of the plurality of battery cells includes at least one vent of the plurality of vents, and each battery cell of the plurality of battery cells includes terminals arranged at the first end.

In some embodiments, the present disclosure is directed to a battery module system, possibly including a plurality of battery modules, an outer enclosure, and a vent port. Each battery module includes a plurality of battery cells and a touch cover. One or more of the battery cells may include a vent that allows gas to be emitted from the battery cell. The touch cover includes at least one opening and/or a respective plurality of openings. The outer enclosure is configured to house the plurality of battery modules. The vent port may be arranged in a wall of the outer enclosure, where at least one opening directs the gas emitted away from the one or more battery cells towards the vent port. The plurality of opening features of each respective touch cover is configured to direct air flow or gas away from the respective plurality of battery cells towards the vent port.

In some embodiments, each respective touch cover includes a flat sheet of material, and at least one opening and/or the plurality of openings includes at least one louvres and/or a plurality of louvres raised above the flat sheet of material to direct the emitted gas towards the vent port, possibly the second direction different from the first direction described above. In some embodiments, the plurality of louvres includes a plurality of louvre strips. In some embodiments, the plurality of louvres includes an array of louvres. To illustrate, an array of louvres, or a plurality of louvre strips, are configured to direct airflow from a first direction corresponding to the vent of the at least one battery cell to the predetermined direction.

In some embodiments, each louvre is aligned to one or more respective battery cells of the plurality of battery cells.

In some embodiments, each battery cell of the plurality of battery cells includes at least one vent of the plurality of vents. In some embodiments, each battery module includes a carrier assembly that arranges the plurality of battery cells in an array. The carrier assembly includes a plurality of busbars and a plurality of through features that correspond to the plurality of vents to allow the gas to flow past the carrier assembly.

In some embodiments, each respective touch cover includes a flat sheet of material,
each respective plurality of opening features includes a plurality of partial cutouts in the flat sheet of material defining a plurality of tabs, and the plurality of tabs are configured to deflect under pressure to direct the gas to flow in the second direction.

In some embodiments, each respective touch cover includes a flat sheet of material, each respective plurality of opening features includes a plurality of partial reliefs in the flat sheet of material defining a plurality of regions, and the plurality of regions are configured to partially break free from the flat sheet and to deflect under pressure to direct the gas to flow in the second direction.

In some embodiments, each battery cell of the plurality of battery cells includes at least one vent arranged at a first end of the battery cell, and each battery cell of the plurality of battery cells includes terminals arranged at the first end. In some embodiments, a method for forming one or more openings is provided to direct emitted gas in a given direction. The method may include providing a material as a flat sheet and forming a cover with the material. Further the method may include applying a pattern to the cover, which may correspond to a plurality of openings. Further, the method may include forming the plurality of openings in the cover based on the pattern applied, where each opening directs the gas emitted away from the one or more battery cells in a predetermined direction.

### Brief Description of the Drawings

The present disclosure, in accordance with one or more various embodiments, is described in detail with reference to the following figures. The drawings are provided for purposes of illustration only and merely depict typical or example embodiments. These drawings are provided to facilitate an understanding of the concepts disclosed herein and shall not be considered limiting of the breadth, scope, or applicability of these concepts. It should be noted that for clarity and ease of illustration these drawings are not necessarily made to scale.
FIG. 1 shows a top view of an illustrative battery system, and an enlargement of one module, in accordance with some embodiments of the present disclosure;
FIG. 2 shows a cross-sectional side view of a portion of an illustrative battery module, undergoing a thermal event, and an enlarged portion, in accordance with some embodiments of the present disclosure;
FIG. 3 shows a cross-sectional side view of a portion of an illustrative battery system with opening features, undergoing a thermal event, in accordance with some embodiments of the present disclosure;
FIG. 4 shows a cross-sectional side view of a portion of another illustrative battery system, undergoing a thermal event, in accordance with some embodiments of the present disclosure;
FIG. 5 shows a perspective view of a plurality of battery cells, undergoing a thermal event, in accordance with some embodiments of the present disclosure;
FIG. 6 shows a cross-sectional side view of an illustrative battery system with more than one battery module, in accordance with some embodiments of the present disclosure;
FIG. 7 shows a perspective top view of an illustrative cover having rows of opening features, in accordance with some embodiments of the present disclosure;
FIG. 8 shows a perspective top view of an illustrative cover having an array of opening features, in accordance with some embodiments of the present disclosure;
FIG. 9 shows a perspective top view of an illustrative battery system including a cover having a pattern of opening features, in accordance with some embodiments of the present disclosure; and
FIG. 10 is a flowchart of an illustrative process for making a battery system having a cover, in accordance with some embodiments of the present disclosure.

### Detailed Description

The present disclosure is directed to systems and methods for managing flow in a battery system enclosure. In the event of a battery cell thermal event, in which one or more battery cells experience thermal runaway, for example, the cells may vent hot exhaust gas or air. In some embodiments, the battery cells are cylindrical and vent axially out of the first top end (e.g., where the electrical terminals maybe arranged concentrically), through an opening or other venting mechanism to allow gas to be emitted from the battery cell. In some circumstances, the vent path of this exhausting gas is restricted due to the module design, battery enclosure, or other design factors. In some embodiments, the present disclosure is directed to a "touch cover" installed on the top of one or more battery modules and/or adjacent to the first top end of the battery cells (e.g., each battery module of a plurality of battery modules). The touch cover has several functions including, for example, acting as a non-conductive barrier between the environment and the tops of the battery cells to reduce shock hazards in manufacture and handling of the battery module, for example. To illustrate, in some instances, the purpose of the touch cover is to reduce or otherwise mitigate the risk of propagation of a potential thermal event to adjacent cells or modules. In some embodiments, the touch cover is thin (e.g., about 0.5mm thick), but still acts as a significant flow barrier to the exhaust gases during a cell thermal runaway venting. In some circumstances, in the absence of openings for example, the touch cover may initially contain the vented gas and causing it to affect neighbor cells, before melting through (e.g., in a non-uniform way). The touch covers of the present disclosures allow vented air and gases out, away from the venting cell, while also preventing or otherwise limiting contamination with neighbor cells and thermal heating. In particular, the touch cover may include one or more openings configured to direct the gas emitted from the one or more vents of the battery cells, where the openings direct the gas emitted in a predetermined direction. Additionally, in some embodiments, the touch cover functions as a physical non-conductive barrier (e.g., preventing touching of battery cells from outside of the touch cover). The touch covers of the present disclosure may help reduce cost, reduce complexity, improve vehicle performance, improve battery performance, or a combination thereof.

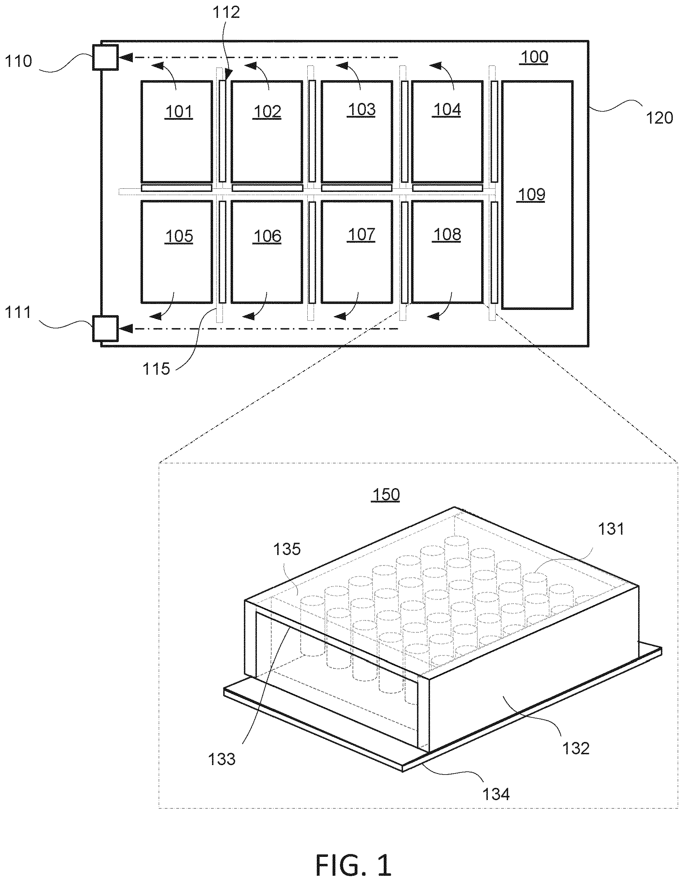

FIG. 1 shows a top view of illustrative battery system 100, and an enlargement of one module, in accordance with some embodiments of the present disclosure. As illustrated, battery system 100 includes electronics 109, vent ports 110 and 111, enclosure 120, optional barriers 112, and battery modules 101-108, each of which may include a plurality of battery cells. As illustrated, battery system 100 includes eight battery modules, which may be electrically coupled in series, parallel, or a combination thereof. In some embodiments, battery system 100 is included in an electric vehicle to, for example, provide electric power to one or more electric motors of the vehicle. Electronics 109 may include power electronics (contactors, relays, switches, transistors, shunts), DC bus management circuitry, control circuitry, sensors and sensor interfaces, any other suitable components or circuitry, or any combination thereof. To illustrate, battery modules 101-108 may be electrically coupled to maintain a DC voltage across a DC bus, which maybe managed and distributed (e.g., to auxiliaries and/or one or more electric motors) using electronics 109. In some embodiments, because electronics 109 may include control circuitry, it may be desired to route venting air and/or gases away from electronics 109. For example, it may be desired to route venting air and/or gas to vent ports 110 and 111 in enclosure 120 to prevent undesired temperature rises in components of battery system 100 due to heat transfer from the venting gas and/or air. As such, gases emitted from one or more battery modules 101-108 may be directed to a vent and/or a ventilation path to direct the gases in a predetermined direction.

Panel 150 shows an enlarged view of battery module 108, illustrating battery cells 131, shear wall 132, carrier 133, cooling plate 134, and cover 135. To illustrate, battery module 108 may be similar or identical to battery modules 101-107. Each of battery cells 131 maybe flat, prismatic, or cylindrical, and may include electricals terminals at one end (e.g., arranged as offset or concentric) or at opposing ends. As illustrated, battery cells 131 are cylindrical, arranged in a pattern (e.g., a hexagonal pattern) with electrical terminals at the top end (e.g., away from cooling plate 134 and proximal to carrier 133). In some embodiments, carrier 133 includes one or more current collectors electrically coupled to a subset of battery cells 131, other current collectors, or a combination thereof. Shear wall 132 provides structural support to battery module 108. Cover 135, which is a touch cover, is arranged over carrier 133 to form a mechanical barrier to battery cells 131 from outside of battery module 108. Cover 135 includes one or more openings to allow and/or direct gases emitted from inside of battery module 108 to a predetermined direction, allowing the gases to escape to the volume between battery module 108 and enclosure 120. In some embodiments, the one or more openings of cover 135 are configured to direct venting gas away from electronics 109 to either or both of vent ports 110 and 111. As illustrated, each of battery modules 101-108 may include a respective cover (e.g., similar to cover 135) that directs flow to the left (e.g., indicated by arrows in FIG. 1) away from electronics 109. The openings may be included in a top surface (e.g., of cover 135), as well as in one or more lateral sides (e.g., in shear wall 132) to allow venting gas to escape the respective module. In some embodiments, for example, the openings may include louvres formed in cover 135. The arrow indicating flow direction in FIG. 1 illustrate a venting flow that is directed outwards to the sides of the battery system, such that venting flow from any one battery module does not significantly flow along another battery module or other battery components that maybe heat sensitive. Accordingly, each of battery modules includes a cover configured to direct flow outwards, where the total venting flow flows along a flow path to the vent port. To illustrate, battery cells of battery system 100 may include vents that direct flow in a first direction, while the respective covers (e.g., cover 135) redirect the venting flow to a predetermined direction indicated by the arrows (e.g., secondary directions that differ from the first direction). In some embodiments, as illustrated in FIG. 1, battery system 100 includes crossmembers 115, which may at least partially isolate pairs of battery modules (e.g., battery modules 102 and 106) from each other, from the other modules, or both. The actual flow is generally directed from each module to the sides of the pack (along sides of enclosure 120), which has openings on each side that allow the gas to travel through internal cavities in the side walls of the pack towards vent ports 110 and 111 at the back. Accordingly, the flow path is redirected from vents of one or more battery cells of one or more modules outward, and then to vent ports 110 and 111. To illustrate, the flow path would prevent or otherwise reduce venting flow from battery module 108 that would otherwise travel across battery modules 105-107 on the way to the rear to exit via vent port 111.

In some embodiments, barriers 112 (also referred to herein as "heat-activated module bay separators" or "thermal barriers") include heat-activated strips between adjacent battery modules (e.g., between battery modules 101 and 102, and every other interface between battery modules). In some embodiments, the barriers allow venting or flow, but when heated (e.g., to a predetermined temperature), barriers 112 activate and block flow between compartments of battery system 100 (e.g., as divided by crossmembers 115, as illustrated). In some embodiments, for example, a battery system may include any suitable number of barriers (e.g., zero, one or at least one, or more than one), which may be arranged one or both sides of a crossmember of crossmembers 115. In some embodiments, barriers 112 need not be included in a battery system. In some embodiments, when included, barriers 112 direct venting gas to follow the directional arrows illustrated in FIG. 1, along a predetermined direction or path towards vent ports 110 and 111.

In some embodiments, the one or more openings (e.g., louvers) in the covers of battery modules 101-108 maybe oriented to direct hot gases toward air extraction devices, direct the gases away from sensitive components (e.g., coolant lines, electronics boards, or other suitable components), or a combination thereof. For example, components may be arranged between the set of battery modules 101-104 and 105-108 (e.g., along the length of battery system 100), in the center of the battery pack (e.g., battery system 100), and the one or more openings may direct gas away from the center. In a further example, the one or more openings may be configured to, or otherwise prioritize, direct venting gases away from sensitive components (e.g., prioritized over a more direct path to vent ports), while in other cases the one or more openings maybe configured to, or otherwise prioritize, direct venting gases toward vent ports 110 and 111.

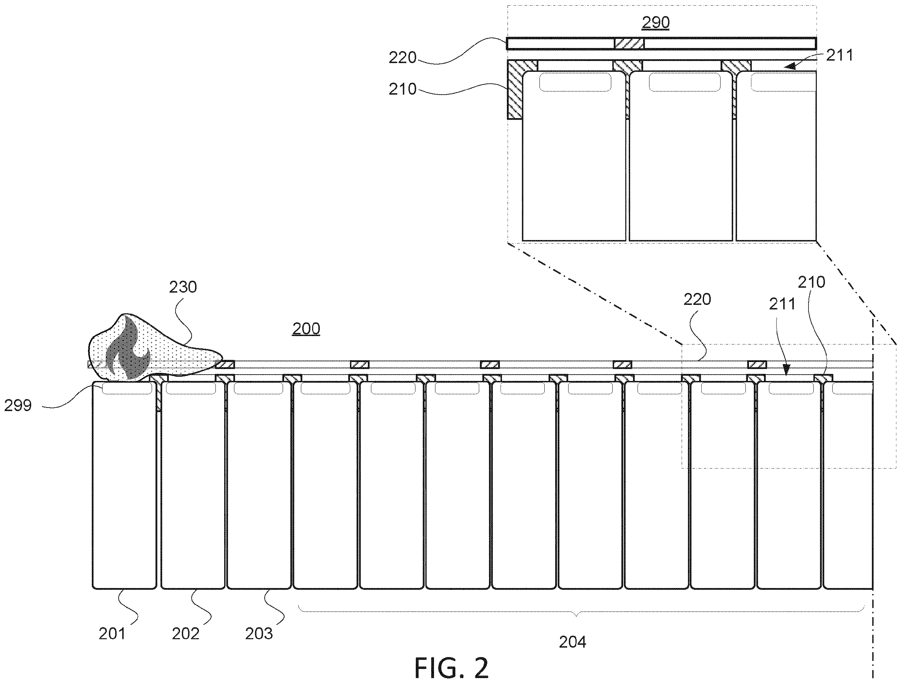

FIG. 2 shows a cross-sectional side view of a portion of illustrative battery module 200, undergoing a thermal event, and enlarged portion 290, in accordance with some embodiments of the present disclosure. Battery module 200 includes battery cells 201, 202, 203, and 204, carrier 210 having through features 211 (e.g., holes of any suitable shape), and cover 220, as illustrated, and it will be understood that battery module 200 may include any other suitable components (omitted in FIG. 2 for purposes of clarity). As illustrated, each of battery cells 201-204 includes a region (e.g., region 299 as indicated for battery cell 201) at a first end (e.g., a first top end, as illustrated) where one or more vents and electrical terminals are arranged. To illustrate, battery module 200 may correspond to any of battery modules 101-108 of FIG. 1. As illustrated, battery cell 201 is undergoing a thermal event, venting hot exhaust air and/or gas (e.g., indicated by region 230), which may spread in the inside volume within cover 220. Accordingly, the venting gases may heat battery cells 202 and 203 which are adjacent to battery cell 201, and possible some of battery cells 204. If cover 220 is not configured to vent, the temperature rises of battery cells 202-204 may increase relatively more than if cover 220 included openings configured to allow venting gas to flow to the outside of cover 220. As such, gasses emitted from battery cells 201-204 may be emitted from one or more vents on the first top end and directed in a predetermined direction to ventilate the gases. In some embodiments, through features 211 correspond to the plurality of vents of the battery cells (e.g., battery cells 201 -204) to allow the gas to flow past the carrier assembly (e.g., carrier 210). Region 290 is enlarged to illustrate carrier 210, which interfaces to a first end of battery cells 201-204 (e.g., to provide alignment, and including through features 211 for electrical connections and venting), more clearly.

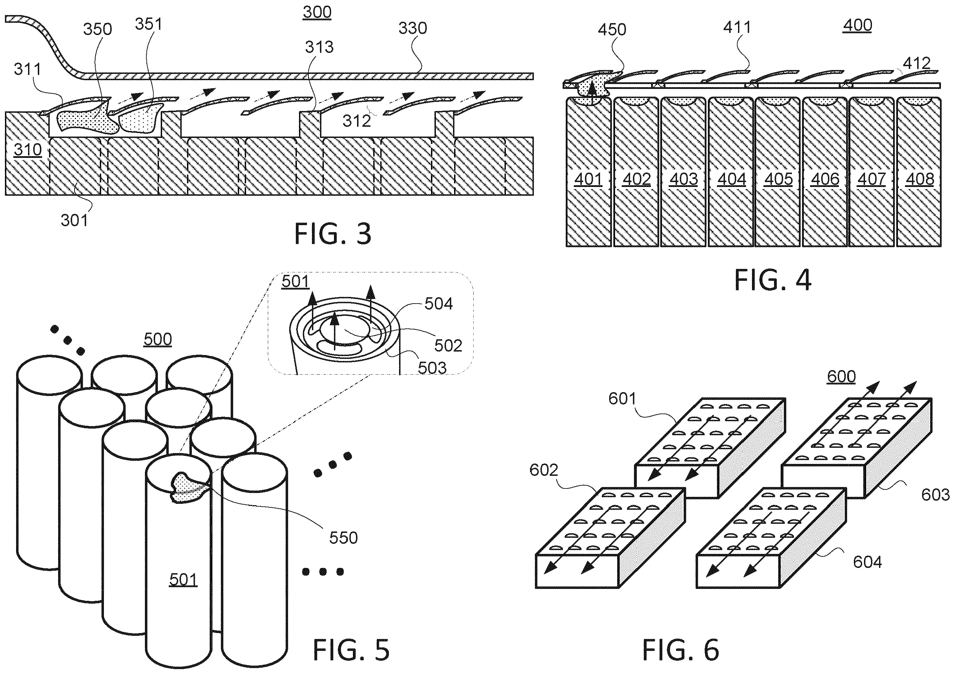

FIG. 3 shows a cross-sectional side view of a portion of illustrative battery system 300 with opening features, undergoing a thermal event, in accordance with some embodiments of the present disclosure. As illustrated, battery system 300 includes battery cells (e.g., of which battery cell 301 is indicated), carrier 310 (e.g., having dividers, of which divider 313 is indicated), cover 311 having openings (e.g., of which, opening 312 is indicated), and enclosure 330. Carrier 310 includes opening into which the battery cells are arranged, with the top of each battery cell being open to cover 311 (e.g., such that the vents and electrical terminals are uncovered by carrier 310). As illustrated, battery cell 301 is undergoing a thermal event, generating heated region 350 and heated region 351. For example, hot gas maybe vented from battery cell 301, which causes a corresponding elevated temperature in heated region 350. The vented gas flows through opening 312 above battery cell 301 to the volume between cover 311 and enclosure 330, directed to the right as illustrated. The openings 312 direct the airflow or flow of emitted/vented gas in a predetermined/desired direction (e.g., to the right as illustrated), thus preventing region 351 from achieving as high of a temperature as would be achieved if the openings were not present. Accordingly, region 351 may exhibit a relatively lesser temperature than region 350 and the corresponding battery cells adjacent to battery cell 301 are not heated as much and do not achieve as high of a temperature. The openings may prevent other battery cells from overheating altogether, reduce the heat transfer rate to adjacent battery cells (e.g., reduce a heat transfer coefficient from the gas to the battery cells), or a combination thereof. The dividers also prevent or otherwise reduce backflow of the vented gas flowing through the openings 312 and between cover 311 and enclosure 330. As illustrated, cover 311 includes louvres that form the openings, allowing the vented gas to escape from inside of cover 311, while providing a barrier to access the interior of cover 311 from outside (e.g., functions as a touch cover).

FIG. 4 shows a cross-sectional side view of a portion of illustrative battery system 400, undergoing a thermal event, in accordance with some embodiments of the present disclosure. As illustrated, battery system 400 includes battery cells 401-408, and cover 411 having openings (e.g., of which, opening 412 is indicated). Although not illustrated in FIG. 4, battery system 400 may include a carrier, an enclosure, any other suitable components, or any combination thereof. To illustrate, battery system 400 need not include dividers (e.g., in some embodiments, a battery system does not include dividers). As illustrated, battery cell 401 is undergoing a thermal event, generating heated region 450. For example, hot gas may be vented from battery cell 401 (e.g., indicated by the arrow in FIG. 4), which causes a corresponding elevated temperature in heated region 450. The vented gas flows through the opening above battery cell 401 to the volume between cover 411 and an enclosure, such as enclosure 330 as described above, directed to the right as illustrated. The openings direct the flow of vented/emitted gas in a predetermined/desired direction (e.g., to the right as illustrated), thus preventing other battery cells from achieving as high of a temperature as would be achieved if the openings were not present. Accordingly, other battery cells (e.g., battery cells 402-408) may exhibit a relatively lesser temperature than battery cell 401. The openings 412 may prevent other battery cells 401-408 from overheating, reduce heat transfer to adjacent battery cells (e.g., reduce a heat transfer coefficient from the gas to the battery cells), or a combination thereof. As illustrated, cover 411 includes louvres that form the openings, allowing the vented gas to escape from inside of cover 411, while providing a barrier to access to the interior of cover 411 from outside (e.g., functions as a touch cover).

FIG. 5 shows a perspective view of a plurality of battery cells 500, undergoing a thermal event, in accordance with some embodiments of the present disclosure. More particularly, battery cell 501 is undergoing a thermal event, causing region 550 to achieve a relatively greater temperature than corresponding regions of other battery cells 500. In some circumstances, the covers of the present disclosure prevent or limit heating of other battery cells by a thermal event corresponding to one or more battery cells. The enlarged view of battery cell 501 shows electrical terminals 502 and 503, and vents 504. To illustrate, electrical terminals 502 and 503 are arranged concentrically, separated by an electrically insulating material. Vents 504 are configured to direct gas in respective directions, as illustrated by the three arrows directed upwards. Vents 504 may direct flow in any suitable direction which may be the same or similar direction, but need not be the same. For example, vents 504 may direct flow upwards, radially outwards, azimuthally along a circumference, or a combination thereof. Although three vents 504 are illustrated in FIG. 5, a battery cell may include any suitable number of vents. Accordingly, a touch cover may redirect flow from vents 504 to a predetermined direction. For example, vents 504 may direct flow in a first direction that is vertical or nearly vertical, while a touch cover may include opening features that direct the flow to a predetermined direction (e.g., horizontal or otherwise different from the first direction).

FIG. 6 shows a cross-sectional side view of illustrative battery system 600 with more than one battery module, in accordance with some embodiments of the present disclosure. Battery system 600 includes battery modules 601-604, each having a respective cover having openings. The openings are configured to direct venting flow from battery cells of each of battery modules 601-604 in a predetermined direction (e.g., towards a vent port and/or away from electronics or other components). A battery system may include a single battery module or more than one battery module, arranged in any suitable pattern or non-pattern arrangement. As illustrated, battery modules 601 and 602 direct flow in the same direction, while battery modules 603 and 604 direct flow in opposite directions.

In an illustrative example, the covers of FIGS. 3, 4, and 6 are configured to create a preferred outlet direction for vented gases, gases vented away from sensitive battery internals, towards one or more vent ports (e.g., breather valves). The opening features are configured to redirect the venting flow to reduce a heat loading to components of a battery system from vented gases. Further, the opening features may help improve burn-through times of a battery system resulting from a thermal event. To illustrate, the opening features minimize or otherwise reduce re-ingestion of hot, vent exhaust gases from a battery cell to neighboring battery cells based on directionality and geometry. The covers also act as a touch-cover, providing a mechanical barrier to the internal volume of the battery module. The directionality of the opening features may redirect (e.g., turn) vented gas jets and prevent direct impingement on an outer enclosure of the battery system. For example, the cover may act as a thermal barrier (e.g., a sacrificial barrier) between venting gases and outer enclosures (e.g., battery pack lids). In some circumstances, the cover may help increases overall burn-through time of the battery system.

In some embodiments, a cover (e.g., a touch cover) is configured for, or is otherwise capable of, acting as a sacrificial barrier that may improve burn-through time of the battery lid. To illustrate, if a battery cell undergoes a thermal runaway and emits energy in the form of hot gas (e.g., from one or more vents of the battery cell), the touch cover may absorb the energy, redirect the energy (e.g., away from both the other cells as well as the pack lid), or a combination thereof. To illustrate further, if the touch-cover did not include openings (e.g., holes, louvres, or any other suitable opening features), the energy input into the touch cover may be large, but the gases would be contained very close to neighbor cells for the duration of the burn-through of the touch-cover (e.g., the heat would be spatially localized). The energy absorption (e.g., heat capacity) may be tuned by material choice, dimensions (e.g., thickness of the touch-cover), relative distance, or a combination thereof. In some circumstances, it may not be possible (e.g., due to manufacturing, cost, and other factors) or preferred to tune the energy absorption characteristics of the touch cover to achieve maximum energy absorbed without negatively affecting the neighbor cells with the contained gases. In some embodiments, including the openings (e.g., louvres) allows the balance between redirection and absorption to be tuned (e.g., optimized or otherwise improved). For example, variables such as material, thickness, opening shape and size (e.g., louver design, size, and spacing), or a combination thereof may be selected to achieve maximum or otherwise improved energy absorption (e.g., in a sacrificial manner), while maintaining not triggering thermal events in neighboring battery cells by containing the hot emitted gases locally for too long (e.g., balancing removal of heat and storage of heat in the touch cover from vented gases).

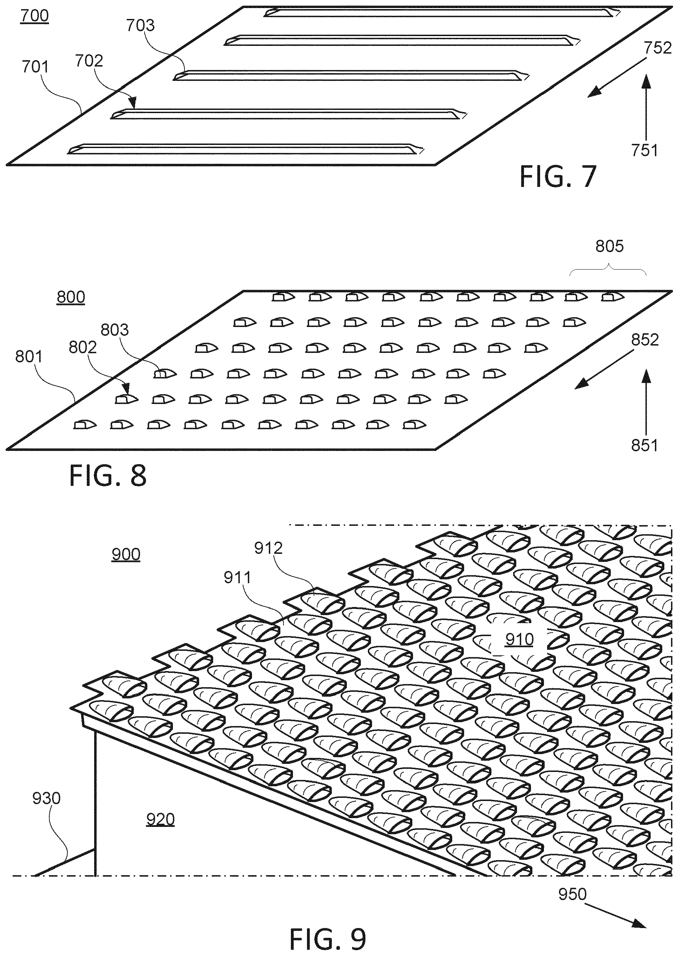

FIGS. 7-9 show illustrative louvered designs of covers for a battery module (e.g., of a battery system). In some embodiments, patterned holes are included in the cover to increase the effective open area (e.g., porosity) for airflow. For example, to improve flow performance and maintain a touch barrier, the holes may be louvered by adding three-dimensionality to the cover (e.g., a sheet of material from which the cover is formed). A louvred design creates a favored flow direction that may be, but need not be, identical for all holes on the touch cover.

FIG. 7 shows a perspective top view of illustrative cover 700 having rows of opening features 702, in accordance with some embodiments of the present disclosure. As illustrated, cover 700 includes a structure 701, which is flat and into which opening features 702 are formed. Opening features 702 are illustrated as louvres strips 703 (e.g., arranged in rows, and configured to direct venting flow (e.g., airflow or gas flow) from a first direction 751 (e.g., corresponding to vents of one or more battery cells) to a second direction 752 (e.g., illustrated as normal to first direction 751, although the second direction maybe any suitable direction). In some embodiments, each opening feature of opening features 702 may be configured to direct the venting flow in a different direction. For example, opening features may direct venting flow outward from a central point (e.g., radially outward in a star pattern), along a curved path (e.g., louvres maybe successively angled across the surface of structure 701), in compound directions (e.g., each opening may follow a path and direct portions of venting flow in different directions), in any other suitable flow path, or any combination thereof. To illustrate, although illustrated as being straight openings, opening features 702 may be bent, curved, or piecewise varied to direct venting flow in more than one direction. In some embodiments, opening features (e.g., opening features 702) along the periphery of a battery module angle towards the battery module edge to direct hot vent gases towards heat-activated thermal barriers (e.g., barriers 112 of FIG. 1) that separate each battery module bay from the other on the underside of a battery lid, further restricting gas flow during a thermal runaway event towards the desired venting pathway by sealing that gas pathway. In some embodiments, each louvre of opening features 702 corresponds to one or more rows of battery cells, or otherwise more than one battery cell (e.g., a group of battery cells). For example, a battery system may include a number of opening features that each correspond to a non-integer number of battery cells. For example, a cover may include N opening features and M battery cells, where N and M are integers, and where N may be greater than, less than, or equal to M.

FIG. 8 shows a perspective top view of an illustrative cover 800 having an array of opening features 802 (e.g., illustrated as array of louvres 803), in accordance with some embodiments of the present disclosure. As illustrated, cover 800 includes a structure 801, which is flat and into which opening features 802 are formed. Opening features 802 are illustrated as array of louvres 803 (e.g., arranged in a two-dimensional pattern) and configured to direct venting flow (e.g., airflow or gas flow) from a first direction 851 (e.g., corresponding to vents of one or more battery cells) to a second direction 852 (e.g., illustrated as normal to first direction 851, although the second direction may be any suitable direction). In some embodiments, each opening feature of opening features 802 may be configured to direct the venting flow in a different direction. For example, opening features may direct venting flow outward from a central point (e.g., radially outward in a star pattern), along a curved path (e.g., louvres may be successively angled across the surface of structure 801), in any other suitable flow path, or any combination thereof. To illustrate, although illustrated as being directed along direction 852, opening features 802 may be varied in orientation to direct venting flow in more than one direction. In some embodiments, each louvre of opening features 802 corresponds to one battery cell, more than one battery cell (e.g., a group of battery cells), or any other suitable ratio (e.g., a ratio of N openings to M battery cells, where N may be greater than, less than, or equal to M). In some embodiments, opening features (e.g., opening features 802) along the periphery of a battery module (e.g., opening features 805, which are a subset of opening features 802) angle towards an edge of cover 800 (e.g., an edge of the battery module to which cover 800 is affixed) to direct hot vent gases towards heat-activated thermal barriers (e.g., barriers 112 of FIG. 1) that may separate each battery module from each other within an outer enclosure thus further directing venting gas to a predetermined direction.

FIG. 9 shows a perspective top view of illustrative battery system 900 including cover 910 having a pattern of opening features 912, in accordance with some embodiments of the present disclosure. As illustrated, battery system 900 includes cover 910, lateral wall 920, and cooling plate 930. As illustrated, cover 910 includes a structure 911, which is flat and into which opening features 912 are formed. Opening features 912 are illustrated as louvres arranged in a two-dimensional pattern, and configured to direct venting flow in direction 950. As illustrated, each opening feature of opening features 912 corresponds to a battery cell, and each opening is configured to direct the venting flow in direction 950. For example, cover 910 includes N openings features 912, and battery system 900 includes M battery cells, where N is equal to M.

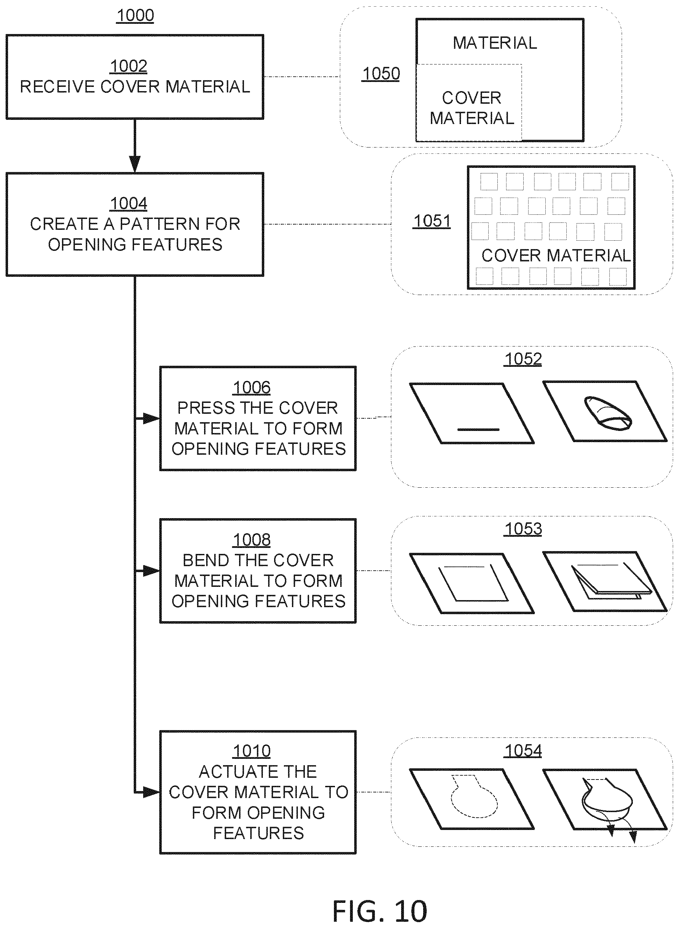

FIG. 10 is a flowchart of illustrative process 1000 for making a battery system having a cover, in accordance with some embodiments of the present disclosure. To illustrate, process 1000 may be used to form any of the covers of FIGS. 1-9.

Step 1002 includes providing and/or receiving cover material. In some embodiments, step 1002 includes forming cover material from a bulk material. As illustrated in panel 1050, cover material may be formed from a portion of material using any suitable process. For example, the material may be stamped, cut, machined, ground, or otherwise modified in shape, composition, or both to form the cover material. In some embodiments, the cover material corresponds to an unfinished part that has a desired overall size, thickness, composition, or a combination thereof. For example, the cover material may be stamped to size for a battery module and may also undergo additional processing to form opening features, other features (e.g., locating features, mounting features, aligning features, sealing features), or a combination thereof. In some embodiments, step 1002 includes arranging, processing, or both, the cover material in preparation for step 1004. The bulk material may include sheet metal (e.g., sheet steel), plastic, any other suitable material, or any combination thereof (e.g., a composite material).

In some embodiments, the touch cover may be made of a metallic material that is electrically insulated (e.g., powder coated steel, anodized aluminum) to guarantee the touch cover will not melt too early during the thermal event, while avoiding interference with electrical circuitry connected to the battery cells, or terminals of the battery cells. In some embodiments, the touch cover may be made of a specific polymer, resin, mineral, any other suitable material (e.g., bakelite, mica, silicone), or combination thereof, that can withstand relatively higher temperatures before melting or losing structural integrity. The thickness of a touch cover, in view of maximum or sufficient temperature and fire resilience, may be determined by the material used in forming the touch cover. For example, a lesser thickness may be used for a metallic cover, while a greater thickness may be used for a plastic material to ensure it can withstand a thermal event for a sufficient time (e.g., at least a few seconds for a thermal event).

Step 1004 includes creating a pattern for opening features in the cover material. In some embodiments, step 1004 may include a pattern stored in computer memory for implementing computer-controlled instructions for machining. For example, step 1004 may include generating instructions for a computer-aided manufacturing (CAM) process, generating instructions for an automated machining process, generating a template, or a combination thereof. In some embodiments, step 1004 includes applying a stamp or press having a patterned die to create features in the cover material. The pattern may be, but need not be, symmetrical. For example, the pattern may include a rectilinear array, a hexagonal pattern, a circular pattern, a random arrangement, any other suitable arrangement, or any combination thereof. As illustrated in panel 1051, the pattern may include a pattern of louvres arranged throughout the surface of the cover material. In some embodiments, step 1004 includes stamping, pressing, cutting, machining, processing, etching, or otherwise modifying the cover material. For example, the pattern may be created and applied using wire EDM, water jet cutting, plasma cutting, laser cutting, machining (e.g., milling or drilling), ground, stamping, any other suitable process, or any combination thereof to form through or not-through features (e.g., blind features). In a further example, step 1004 may include weakening, thinning, or otherwise modifying the cover material based on the pattern to form break-away regions, through features, or both.

Step 1006 includes pressing the cover material to form opening features. Step 1006 may include, for example, stamping or pressing the cover material using a die. In some embodiments, step 1006 and step 1004 may be combined, such that a pattern is pressed into the cover material. In some embodiments, step 1004 may include applying a pattern of cuts or other processing and then step 1006 includes pressing to form directional opening features from the cuts (e.g., as illustrated in panel 1052). In some embodiments, step 1006 includes deforming the cover material to form the opening features. For example, a die may be used to form curved louvres, as illustrated in panel 1052.

Step 1008 includes bending portions of the cover material to form opening features. Step 1008 may include, for example, stamping or pressing the cover material using a die. In some embodiments, step 1008 and step 1004 may be combined, such that a pattern is bent into the cover material. In some embodiments, step 1004 may include applying a pattern of cuts or other processing and then step 1008 includes bending to form directional opening features from the cuts (e.g., as illustrated in panel 1053). In some embodiments, step 1008 includes flexing the cover material at a hinge joint to form the opening features. For example, a die may be used to form flat louvres at an angle, as illustrated in panel 1053.

Step 1010 includes actuating portions of the cover material to form opening features. In some embodiments, step 1010 is performed during a thermal event, rather than prior to installation. For example, a pattern of reliefs may be formed at step 1004, using any suitable technique, and pressure forces from the thermal event (e.g., from momentum of a hot gas) may force open the relief to form opening features at the location of the thermal event. Step 1010 may include, for example, stamping or pressing the cover material using a die based on the pattern of step 1004. In some embodiments, step 1004 may include applying a pattern of cuts or other processing and then step 1010 includes actuating to form directional opening features from the cuts (e.g., as illustrated in panel 1052). As illustrated in panel 1053, the opening feature may be any suitable shape, and be configured to direct/redirect flow in any suitable direction.

In some embodiments, process 1000 is applied to create slit holes in the cover and form angled vanes. For example, this creates greater open area for airflow in the cover, maintains the barrier, and also creates a favored direction for the vented gas. To illustrate, steps 1006, 1008, and 1010 may be used alternatively, or in combination to form opening features. For example, process 1000 may be applied using step 1006, 1008, 1010, or a combination thereof. A cover for a battery module may be formed using any or all of the illustrative steps of process 1000, in accordance with the present disclosure. In some embodiments, steps 1008 and 1010 may be combined or otherwise performed together. For example, the plurality of opening features may include a plurality of reliefs (e.g., partial cutouts, partial reliefs, or a combination thereof) in a flat sheet of material defining a plurality of regions or tabs and the plurality of regions or tabs is configured to partially break free from the cover material (e.g., a flat sheet) and to deflect under pressure to direct the gas to flow in the second direction

The foregoing is merely illustrative of the principles of this disclosure, and various modifications may be made by those skilled in the art without departing from the scope of this disclosure. The above-described embodiments are presented for purposes of illustration and not of limitation. The present disclosure also can take many forms other than those explicitly described herein. Accordingly, it is emphasized that this disclosure is not limited to the explicitly disclosed methods, systems, and apparatuses, but is intended to include variations thereto and modifications thereof, which are within the scope of the following claims.

## Claims

1. A battery system comprising:
at least one battery cell comprising a vent on a first end to allow gas to be emitted from the battery cell; and
a touch cover adjacent to the first end, wherein the touch cover comprises at least one opening configured to direct the gas emitted from the vent of the at least one battery cell in a predetermined direction.

2. The battery system of claim 1, further comprising:
an outer enclosure arranged around the at least one battery cell and the touch cover; and
a vent port arranged in a wall of the outer enclosure.

3. The battery system of claim 2, wherein the at least one opening is configured to redirect the gas emitted to flow along an interior surface of the outer enclosure and towards the vent port.

4. The battery system of claim 2 or claim 3, wherein the predetermined direction is oriented towards heat-activated module bay separators to direct gas flow towards the vent port.

5. The battery system of any of claims 1 to 4, wherein the touch cover comprises a flat sheet of material, and wherein the at least one opening comprises a plurality of louvres raised above the flat sheet of material and oriented in the predetermined direction.

6. The battery system of claim 5, wherein the plurality of louvres comprises a plurality of louvre strips or an array of louvres, configured to direct airflow from a first direction corresponding to the vent of the at least one battery cell to the predetermined direction.

7. The battery system of claim 6, wherein each louvre is aligned to one or more respective battery cells of the plurality of battery cells.

8. The battery system of any of claims 1 to 4, wherein:
the at least one opening comprises a plurality of at least partial reliefs in a flat sheet of material defining a plurality of regions; and
the plurality of regions is configured to partially break free from the flat sheet and to deflect under pressure to direct the gas to flow in the second direction.

9. The battery system of any of claims 1 to 4, wherein:
the at least one opening comprises a plurality of partial cutouts in a flat sheet of material defining a plurality of tabs; and
the plurality of tabs is configured to deflect under pressure to direct the gas to flow in the second direction.

10. The battery system of any preceding claim, wherein:
the battery system further comprises a carrier assembly electrically coupling subsets of the plurality of battery cells in parallel and coupling the subsets in series;
the carrier assembly arranges the plurality of battery cells in an array, the carrier assembly comprises a plurality of busbars; and
the carrier assembly comprises a plurality of through features that correspond to the plurality of vents to allow the gas to flow past the carrier assembly.

11. The battery system of any preceding claim, wherein:
each battery cell of the plurality of battery cells comprises at least one vent of the plurality of vents; and
each battery cell of the plurality of battery cells comprises terminals arranged at the first end.

12. A method comprising:
providing a material as a flat sheet;
forming a cover with the material;
applying a pattern to the cover corresponding to a plurality of openings; and
forming the plurality of openings in the cover based on the pattern applied,
wherein each opening is configured to direct gas emitted in a predetermined direction.

13. The method of claim 12, wherein the plurality of opening features comprises a plurality of louvres configured to direct airflow to a predetermined direction, and wherein forming the plurality of opening features comprises pressing the cover material to form the plurality of louvres.

14. The method of claim 12 or claim 13, further comprising arranging the cover on a battery module comprising a plurality of battery cells to direct gas emitted from the plurality of battery cells.
